Europäisches Patentamt

European Patent Office

Office européen des brevets

(11) Publication number: **0 332 590**
**A1**

## (12) EUROPEAN PATENT APPLICATION

(21) Application number: **89830104.9**

(22) Date of filing: **07.03.89**

(51) Int. Cl.⁴: **B 65 G 47/24**
**B 65 G 47/44**

(30) Priority: **07.03.88 IT 1967488**

(43) Date of publication of application:
**13.09.89 Bulletin 89/37**

(84) Designated Contracting States:
**CH DE ES FR GB LI**

(71) Applicant: **START S.R.L.**
**Corso Garibaldi, 120**
**Seveso Milano (IT)**

(72) Inventor: **De Benedetti, Dario**
**Via Canova, 25**
**Milano (IT)**

(74) Representative: **Caregaro, Silvio et al**
**c/o Società Italiana Brevetti S.p.A. Via Carducci 8**
**I-20123 Milano (IT)**

(54) **Apparatus for transferring workpieces from a workstation to another, in indexed positions.**

(57) This invention concerns an apparatus adapted to transfer workpieces from a workstation to another, in indexed positions.

The subject apparatus, according to the type of indexed position desired, uses two stations, adapted to cause workpiece rotation and overturning respectively, or only one station, in this respect the geometry of said stations being such that the workpiece, while moving therethrough under the action of gravity, is guided in order to perform the above motions.

Fig. 3

**Description**

## APPARATUS FOR TRANSFERRING WORKPIECES FROM A WORKSTATION TO ANOTHER, IN INDEXED POSITIONS

This invention concerns an apparatus adapted to provide the transferring of workpieces from a workstation to another, in an indexed position.

As it is well known, the problem of transferring workpieces, in indexed positions, along industrial manufacturing lines is widely recognized in that it is always desirable that the workpieces arrive at a predetermined workstation constantly indexed in the same way.

At present the subject problem has been solved by using manipulators or robots adapted to pick up the workpieces from a workstation and take them to the next with a simultaneous indexing action. As it is apparent, the above approach is very expensive, both because of the cost of the manipulators per se, and because the latter require frequent maintenance involving use of highly skilled labor.

It is also apparent that manual indexing operations, performed by an operator, imply side costs adding up to the final price of the finished workpiece.

There has now been contrived, and it makes the subject of this invention, an apparatus wherein all the above drawbacks are corrected, in particular in that said apparatus is adapted to perform transferring, in an indexed position, of substantially parallelepiped workpieces, requiring neither manipulators nor labor, whereby it is extremely cost effective, while providing in any case the necessary reliability features as far as the requirement of obtaining a correct arrival position is concerned.

The features as well as the advantages of the apparatus of this invention will become apparent from the following detailed description of a non limiting embodiment thereof, made in reference to the attached drawing, wherein:

Figure 1 is a perspective view of one of the stations comprising the apparatus, and in particular of the station adapted to perform workpiece rotation;

Figure 2 is a perspective view of the second station comprising the apparatus, in particular the workstation adapted to overturn the pieces;

Figure 3 is a perspective view showing the workpiece rotating station having associated therewith a downstream workpiece overturning station; and

Figure 4 is a perspective view of the workpiece overturning station having associated therewith a workpiece rotating station.

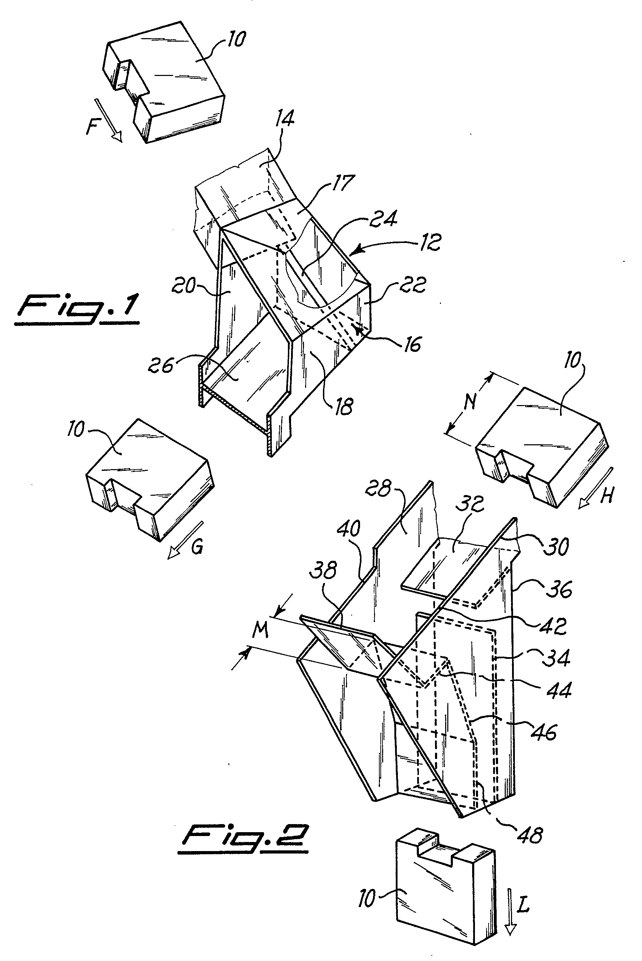

Referring now in particular to Figure 1, first there will be described the workpiece rotating station, said workpieces, as it is shown also in the remaining Figures, having a parallelepiped shape.

In Figure 1, workpiece 10 coming from a machining unit, according to the direction of arrow F, has to undergo an approximately 90° change in direction whereby, at the exit of the station controlling said change, it will proceed according to the direction of arrow G.

The station wherein the forwarding front of the workpiece is modified, generally referred by reference number 12, includes a substantially tubular downward sloping initial portion 14, only partially shown in Figure 1, whose length will depend in any case upon specific requirements to be met each particular time.

For instance, arrival of workpice 10 to station 12 will be obtained by means of a simple chute where workpice 10 slides down in order to subsequently enter through the inlet of tubular section 14 of station 12.

Substantially tubular section 14 comes out into a properly shaped chamber 16, which is provided to gradually stop workpiece 10 in order to prevent the latter from bouncing, since this problem would either cause the piece to definitely stop, or it would cause undesired motions of the workpiece, whereby the latter would come out of station 12 in a position different from the desired position.

Chamber 16 includes an upper wall, or roof 17, sloping downwards with a slope substantially identical to the upper wall of tubular section 14.

Chamber 16 further includes two side walls 18, 20 wherein the former is a suitable amount shorter than the latter.

Finally, on the side opposite to the exit of workpiece 10, chamber 16 is provided with a rear wall 22.

Rear wall 22 is substantially provided as an extention of the wall of tubular section 14 which, in Figure 1, is the right hand side wall. In that way, workpiece 10 can be led forward in the proper moving direction, while transverse motions thereof are prevented.

Close to rear wall 22 a chute 24 leads workpiece 10 to gradually leaning downwards. In the embodiment shown herein, chute 24 is a triangle shaped wall, in particular a right-angle triangle whose hypotenuse is the actual chute. However, as it should be apparent, the side of chute 24, where workpiece 10 has to slide along, may be a different shape, for instance slightly convex, while performing the same function.

Once workpiece 10 has arrived at the end of chute 24, and has stopped against wall 18 of chamber 16, it moves, still under the action of gravity, along bottom wall 26 of chamber 16 and since said wall slopes downwards, it allows the workpiece to move forward and to come out of the subject station along the direction of arrow G.

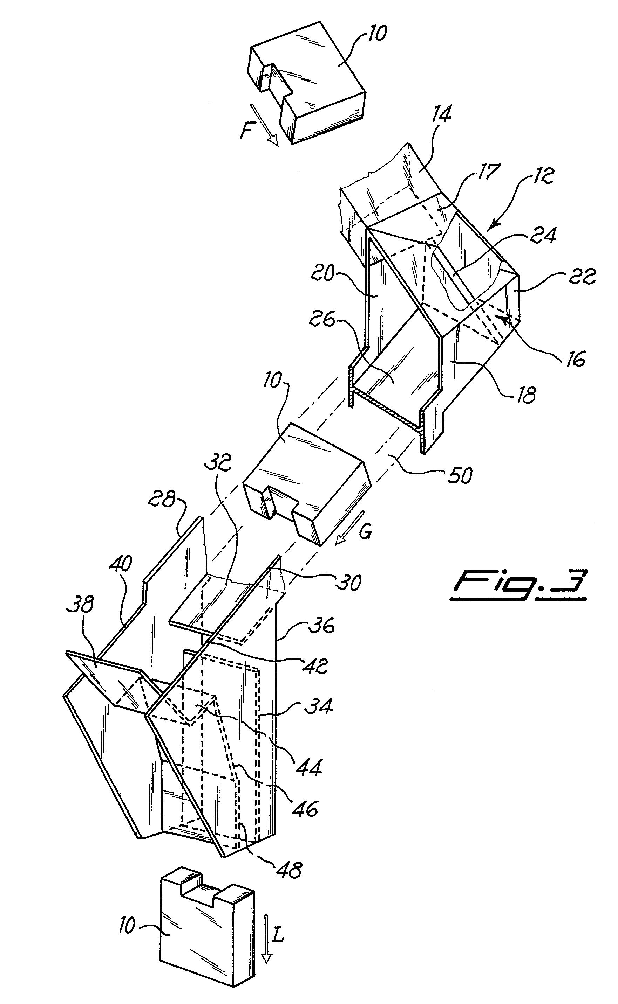

In the embodiment considered herein, the station changing the forward moving front of workpiece 10 is adapted to change said direction of a 90° angle but, as it should be apparent, by adequately changing the relative position between the longitudinal axis of tubular section 14 and that of chamber 16, direction changes according to different angles can be obtained, and that is usually done according to the arrival position one has to meet. Referring now in particular to Figure 2, the second workstation of the inventive apparatus, adapted to perform workpice 10 overturning, is shown therein.

In fact from said Figure it may be noted that workpiece 10 is fed to said station, for instance along a chute, according to a direction shown by arrow H, and said workpiece has its grooved side facing forward. When coming out of the overturning station, the workpiece moves downwards along the direction of arrow L and the grooved side at this point can be noticed to be facing rearwards relative to the forwarding direction.

The workpice 10 overturning station includes, at the entrance a guide channel whose side walls 28 and 30 are separated by a distance equal to the width of workpiece 10 whereby the latter cannot move in a transverse direction. Side walls 28 and 30 are connected to each other by a chute-shaped bottom wall 32 along which the workpiece slides under the action of gravity.

Then, bottom wall 32 ends in a region where suitably oriented walls are provided, which will bring about the actual overturning. For that purpose, the subject station includes a substantially vertical first wall 34, lying in a plane containing the end edge of the chute portion 32. By the way, it should be noted that vertical wall 34 is substantially parallel to rear wall 36 of the station frame.

The means performing the actual overturning of workpiece 10 include first of all a stop wall 38 against which workpiece 10 comes to engage once it has left the chute shaped wall 32, while being guided in the forwarding direction by side walls 40 and 42 of the station structure, whose distance is still the same as the width of workpiece 10.

Stop wall 38 extends, in the direction of chute shaped wall 32, with a temporary support plane, shown at 44, for workpiece 10.

The width of temporary support plane 44 for workpiece 10 is equal to the width of the latter, in that the support plane as well is enclosed between station side walls 40, 42. On the contrary, the length of said plane, which is indicated schematically at M, is shorter than length N of workpiece 10, and it is for instance one third of the workpiece length. That is in order to avoid that workpiece 10 stops completely on top of support plane 44 without continuing to run forward, towards the station exit. It can be stated with close approximation that length N must be such that support plane 44 receives a limited portion of workpice 10, such that the portion thereof projecting out of support plane 44 causes the workpiece to fall by rotation from said support plane. Once workpiece 10 leaves, as indicated above, support plane 44, it is led by a further wall 46, towards the lower portion of the station. In particular, wall 46 is sloping relative to wall 34 mentioned above and, in particular, it converges towards the latter, substantially in order to make easier for workpiece 10 to enter the final portion of the station, wherein one last wall 48 is provided, in a direction substantially parallel to wall 34, said end walls bringing eventually the workpiece to a final required position, which is a vertical position, and is indicated by arrow L.

As it has already been mentioned for the forward moving front changing station, the overturning station as well can be shaped in such a way as to provide a workpiece outgoing direction different from the one shown in Figure 2. For this purpose it would be enough to modify the arrangement of walls 46 and 48, and of wall 34 facing the latter, in order to provide a different exit direction. For instance, said walls 46 and 48, and wall 34 might be oriented towards the front portion or towards the rear portion of the station, which corresponds to a left-hand side or to a right-hand side displacement in Figure 2 respectively.

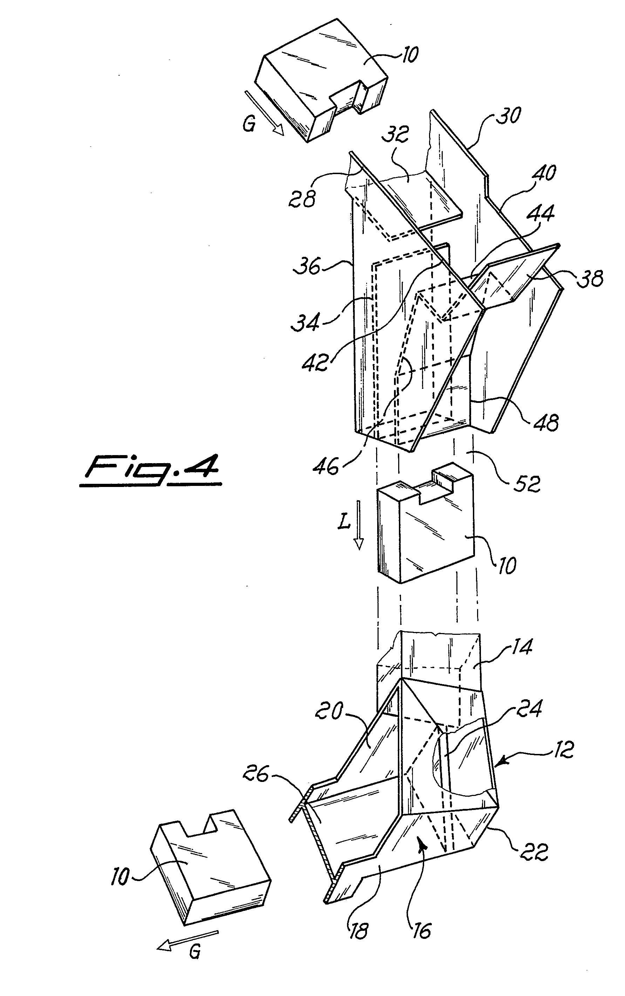

Referring now in particular to Figure 3, one of the possible combinations of the stations shown in Figure 1 and in Figure 2 is shown. In particular, according to this first combination, the station for changing the workpiece 10 forward moving direction is located upstream, and it feeds the workpiece overturning station. In Figure 3 there is shown schematically, by a chain line, guide channel 50, which is provided to connect the exit from the workpiece forward moving direction change station, to the inlet of the workpiece overturning station. Channel 50 as well will have the same width as workpiece 10.

In Figure 3, as well as in Figure 4 to be described in the following, the same members of Figures 1 and 2 are shown by identical reference numbers.

Eventually, in Figure 4 there is shown the second of the possible combinations of the pair of stations of the inventive apparatus and, as it may be seen, in this case the workpiece 10 overturning station is located upstream, and it feeds the workpiece forward moving direction changing station.

A substantially vertical channel has been shown by chain lines, referenced at 52, which might also have a different direction, and which connects the workpiece 10 overturning station exit to the forward moving direction changing station inlet. This channel 52 as well will have the same cross section as workpiece 10, still to prevent workpiece 10 from moving in a transverse direction.

It should further be noticed that in those regions wherein the piece might be particularly prone to change its orientation, and in particular in the stations, the guide geometry is such that the diagonal of the tubular section thereof is shorter than the workpiece three- dimensional diagonal. That avoids undesired workpiece rotations. From the above, it should be apparent that the inventive apparatus is extremely simple, flexible and reliable.

The subject apparatus doesn't practically require any maintenance, in that the members comprising the same are extremely simple, and the stresses acting thereon are very low.

Eventually, it should be noted that, by properly modifying the slopes of the various guide walls, it will be possible to reach differently indexed positions, according to specific needs of each particular case.

It should eventually be understood that variations and/or modifications can be made to the apparatus according to this invention, without exceeding the scope of protection of the same invention.

## Claims

1. An apparatus for transferring workpieces from a manufacturing unit to another in indexed positions, characterized in that it includes at least one station adapted to cause a change in the forward moving direction of workpieces (10) and/or at least one station providing an overturning of said workpieces.

2. The apparatus of Claim 1, characterized in that station (12) providing a change in the workpiece forward moving front direction includes, at the entrance thereof, a substantially tubular downward sloping section (14) which comes out into a chamber (16), wherein workpiece (10) temporarily stops, and subsequently proceeds downwards, under the action of gravity, along a downward sloping bottom wall (26) of chamber (16), said bottom wall being angularly offset relative to tubular section (14), said workpiece finally coming out of station (12).

3. The apparatus of Claim 2, characterized in that chamber (16), on the side opposite to workpiece (10) exit side, is provided with a rear wall (22) connecting to one of the side walls of tubular portion (14).

4. The apparatus of Claim 2, characterized in that within chamber (16), close to rear wall (22) there of, there is provided a chute (24) adapted to lead workpiece (10) in a downwards guided motion, until it stops against one of chamber (16) side walls.

5. The apparatus of Claim 4, characterized in that chute (24) comprises a substantially triangle shaped wall.

6. The apparatus of Claim 2, characterized in that substantially tubular portion (14) has the same cross section as workpiece (10).

7. The apparatus of Claim 2, characterized in that the workpiece (10) forward moving front direction changing station outlet channel has the same width as the workpieces.

8. The apparatus of Claim 1, characterized in that workpiece (10) overturning station includes, at the inlet thereof, a channel provided with a downward sloping bottom wall (32), and two side walls (28, 30) spaced apart from each other in the same amount as the workpiece width.

9. The apparatus of Claim 8, characterized in that, at a certain distance from the end edge of bottom wall 32 there is provided a stop wall (38) between station side walls (40, 42) which are spaced apart in the same amount as the width of workpiece (10), said stop wall (38) extending, at the lower end thereof, into a workpiece (10) temporary support wall (44) lying in the same plane as bottom wall (32).

10. The apparatus according to Claim 9, characterized in that workpiece (10) temporary support wall (44) has a length M shorter than length N of workpiece (10), whereby the latter, once it has stopped against wall (38) rotates downwards owing to the larger weight of the portion thereof projecting out of temporary support plane (44).

11. The apparatus of Claim 8, characterized in that underneath station inlet bottom wall (32), there is provided a wall (34) lying in a plane containing bottom wall (32) end edge.

12. The apparatus of Claim 11, characterized in that, opposite to wall (34), there is provided a sloping wall (46) converging towards wall (34) and finally extending into a wall (48), parallel to the opposed portion of wall (34).

13. The apparatus of Claim 12, characterized in that the channel defined by walls (34, 46 and 48) together with workpiece (10) overturning station side walls (40, 42) has substantially the same width as said workpieces (10).

*Fig.1*

*Fig.2*

*Fig.3*

_Fig.4_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 003 813  (MACHINEFABRIEK W. HUBERT) <br> * Whole document * <br> --- | 1 | B 65 G   47/24 <br> B 65 G   47/44 |
| X | GB-A-2 061 892  (KING INSTRUMENT CORP.) <br> * Page 3, line 21 - page 4, line 62; figures * <br> --- | 1-3,7 | |
| Y | IBM TECHNICAL DISCLOSURE BULLETIN, vol. 9, no. 9, February 1967, pages 1193-1194, New York, US; G. PAEGLE et al.: "Workpiece reorientation apparatus" <br> * Abstract * | 1 | |
| A | IDEM <br> --- | 2,3 | |
| Y | PATENT ABSTRACTS OF JAPAN, vol. 10, no. 372 (M-544)[2429], 11th December 1986; & JP-A-61 166 403 (ROHM CO., LTD) 28-07-1986 <br> * Abstract * | 1 | TECHNICAL FIELDS SEARCHED (Int. Cl.4) |
| A | IDEM <br> ----- | 8-13 | B 65 G |

The present search report has been drawn up for all claims

| Place of search | Date of completion of the search | Examiner |
|---|---|---|
| THE HAGUE | 12-06-1989 | OSTYN T.J.M. |

EPO FORM 1503 03.82 (P0401)